(19) Europäisches Patentamt
European Patent Office
Office européen des brevets

(11) **EP 0 800 265 B1**

(12) **EUROPÄISCHE PATENTSCHRIFT**

(45) Veröffentlichungstag und Bekanntmachung des Hinweises auf die Patenterteilung:
**11.02.2004   Patentblatt 2004/07**

(51) Int Cl.⁷: **H02P 21/00**

(21) Anmeldenummer: **97810117.8**

(22) Anmeldetag: **03.03.1997**

(54) **Verfahren und Vorrichtung zur direkten Drehmomentregelung einer Drehfeldmaschine**

Process and apparatus for direct torque control of an induction machine

Procédé et appareil pour la régulation directe de couple d'une machine à champs tournant

(84) Benannte Vertragsstaaten:
**AT BE CH DE ES FI FR GB IT LI NL SE**

(30) Priorität: **01.04.1996  DE 19612920**

(43) Veröffentlichungstag der Anmeldung:
**08.10.1997   Patentblatt 1997/41**

(73) Patentinhaber: **ABB Schweiz AG**
**5400 Baden (CH)**

(72) Erfinder:
• **Pohjalainen, Pasi**
**5415 Nussbaumen (CH)**
• **Stulz, Christian, Dr.**
**8008 Zürich (CH)**

(74) Vertreter: **ABB Patent Attorneys**
**c/o ABB Schweiz AG**
**Brown Boveri Strasse 6**
**5400 Baden (CH)**

(56) Entgegenhaltungen:
**EP-A- 0 179 356          EP-A- 0 595 319**
**US-A- 4 823 251**

• **PATENT ABSTRACTS OF JAPAN vol. 096, no. 010, 31. Oktober 1996 & JP 08 149830 A (MITSUBISHI ELECTRIC CORP), 7. Juni 1996**
• **W. ZIMMERMANN: "FELDORIENTIERT GEREGELTER UMRICHTERANTRIEB MIT SINUSFÖRMIGEN MASCHINENSPANNUNGEN" ETZ ARCHIV,August 1988, Seiten 259-266, XP002078673 Germany**
• **I. TAKAHASHI, TOSHIHIKO NOGUCHI: "A NEW QUICK-RESPONSE AND HIGH-EFFICIENCY CONTROL STRATEGY OF AN INDUCTION MOTOR" IEEE TRANSACTIONS ON INDUSTRY APPLICATIONS, Bd. IA-22, Nr. 5, Oktober 1986, Seiten 820-827, XP002078674**

## Beschreibung

Technisches Gebiet

Die Erfindung bezieht sich auf das Gebiet der Leistungselektronik. Sie geht aus von einem Verfahren zur direkten Drehmomentregelung (Direct Torque Control = DTC) gemäss dem Oberbegriff des ersten Anspruchs.

Stand der Technik

Ein solches Verfahren bzw. eine entsprechende Vorrichtung wird im Artikel "Direkte Drehmomentregelung von Drehstromantrieben", ABB Technik 3/1995, Seiten 19-24, beschrieben. Dieses Verfahren geht aus von der sogenannten "Direkten Selbstregelung", wie sie in der EP-B1-0 179 356 beschrieben wird. Das DTC-Verfahren (DTC = Direct Torque Control) stellt ein einfaches, zuverlässiges und hochdynamisches Drehmomentregelungsverfahren für Drehfeldmaschinen dar. Es umfasst grundsätzlich folgende Schritte:

- Berechnen eines Fluss-Istwertes aus einer Umrichterspannung
- Berechnen eines Drehmoment-Istwertes
- Vergleichen des Fluss-Istwertes und des Drehmoment-Istwertes mit entsprechenden Sollwerten mittels eines Hysteresereglers
- Bilden eines optimalen Steuerungsvektors für die Schalter des Umrichters nach Massgabe des Hysteresereglers

Um die Maschine vor zu steilen Spannungsflanken, welche zu Beschädigungen der Isolationen führen können, zu schützen, ist es wünschenswert, zwischen dem Umrichter und dem Motor ein Sinus-Filter einzuschalten. Für ein System von pulsdauermodulierten Umrichtern mit Sinus-Filter wird ein Regelungsverfahren z.B. in der EP-A2-0 595 319 angegeben. Die Filterkapazität und die Filterinduktiviät stellen regelungstechnisch zwei Integratoren dar. Im Frequenzbereich ergibt sich daher für die Schaltfrequenz eine 180° Phasenverschiebung zwischen Motorspannung und Umrichterspannung. Das heisst, dass die für das DTC-Verfahren benötigten Signale mit falschem Vorzeichen vorliegen. Aufgrund der durch das Sinus -Filter hervorgerufenen 180° Phasenverschiebung zwischen Motorspannung und Umrichterspannung ist das bekannte DTC-Verfahren auf eine Anordnung mit Sinus-Filter nicht mehr unmittelbar anwendbar. Ausserdem treten aufgrund der Resonanz des Filters störende Oszillationen auf.

Darstellung der Erfindung

Aufgabe der vorliegenden Erfindung ist es deshalb, ein Verfahren und eine Vorrichtung zur Direkten Drehmomentregelung für eine über ein Sinus-Filter gespeiste Drehfeldmaschine anzugeben, das möglichst ohne grosse Anpassung an bereits bekannte Verfahren bzw. Vorrichtungen auskommt. Zudem sollen die durch das Filter bedingten Oszillationen wirksam gedämpft werden.

Diese Aufgabe wird bei einem Verfahren der eingangs genannten Art durch die Merkmale des ersten Anspruchs gelöst. Bei einer Vorrichtung wird die Aufgabe durch die im unabhängigen Vorrichtungs anspruch definierte Merkmals Kombination gelöst.

Kern der Erfindung ist es also, dass ein durch das Filter fliessender Strom und/oder eine Filterausgangsspannung gemessen wird und der Fluss-Sollwert und der Drehmoment-Sollwert nach Massgabe der gemessenen Spannung und/oder des gemessenen Stromes korrigiert werden.

Die Korrektur umfasst eine Transformation der Filterausgangsspannung in eine erste zu einem Statorfluss senkrechte und eine zweite zum Statorfluss parallele Komponente sowie eine Verminderung der Drehmoment- und Fluss-Sollwerte proportional zum oszillierenden Teil der Filterausgangsspannung.

Auf diese Weise können die durch das Sinus-Filter hervorgerufenen Oszillationen wirksam gedämpft werden.

Die Berechnung der Komponenten kann auf verschiedene Weise erfolgen. Anstelle einer Filterausgangsspannung kann auch ein Filterstrom gemessen und daraus eine Filterspannung berechnet werden. Diese Varianten sind Gegenstand abhängiger Ansprüche. Ausserdem wird noch eine Vorrichtung zur Durchführung eines erfindungsgemässen Verfahrens angegeben.

Weitere Ausführungsbeispiele ergeben sich aus den entsprechenden abhängigen Ansprüchen.

Der Vorteil des erfindungsgemässen Aufbaus besteht darin, dass die Drehfeldmaschine mittels der Verwendung eines Sinus-Filters vor zu steilen Spannungsflanken, welche zu Beschädigungen der Isolationen führen können, geschützt wird, dass dennoch wesentliche Teile des DTC-Verfahrens bzw. einer entsprechenden Vorrichtung ohne grosse Änderung verwendet werden können.

Ausserdem können durch das Filter hervorgerufene Oszillationen wirksam gedämpft werden.

## Kurze Beschreibung der Zeichnungen

Nachfolgend wird die Erfindung anhand von Ausführungsbeispielen im Zusammenhang mit den Zeichnungen näher erläutert.

Es zeigen:

**Fig. 1** Eine Schaltungsanordnung mit einer von einem Umrichter über ein Sinus-Filter gespeisten Drehfeldmaschine;

Fig. 2    Eine Variante zu Figur 1;

Fig. 3    Ein Blockschema einer erfindungsgemässen
Vorrichtung nach einem ersten Ausführungsbeispiel;

Fig. 4    Ein Blockschema einer erfindungsgemässen
Vorrichtung nach einem zweiten Ausführungsbeispiel;

Fig. 5    Ein Blockschema einer erfindungsgemässen
Vorrichtung nach einem dritten Ausführungsbeispiel;

Fig. 6    Ein Blockschema einer erfindungsgemässen
Vorrichtung nach einem vierten Ausführungsbeispiel;

Fig. 7    Ein Blockschema einer erfindungsgemässen
Vorrichtung nach einem fünften Ausführungsbeispiel;

Die in den Zeichnungen verwendeten Bezugszeichen und deren Bedeutung sind in der Bezugszeichenliste zusammengefasst aufgelistet. Grundsätzlich
sind in den Figuren gleiche Teile mit gleichen Bezugszeichen versehen.

**Wege zur Ausführung der Erfindung**

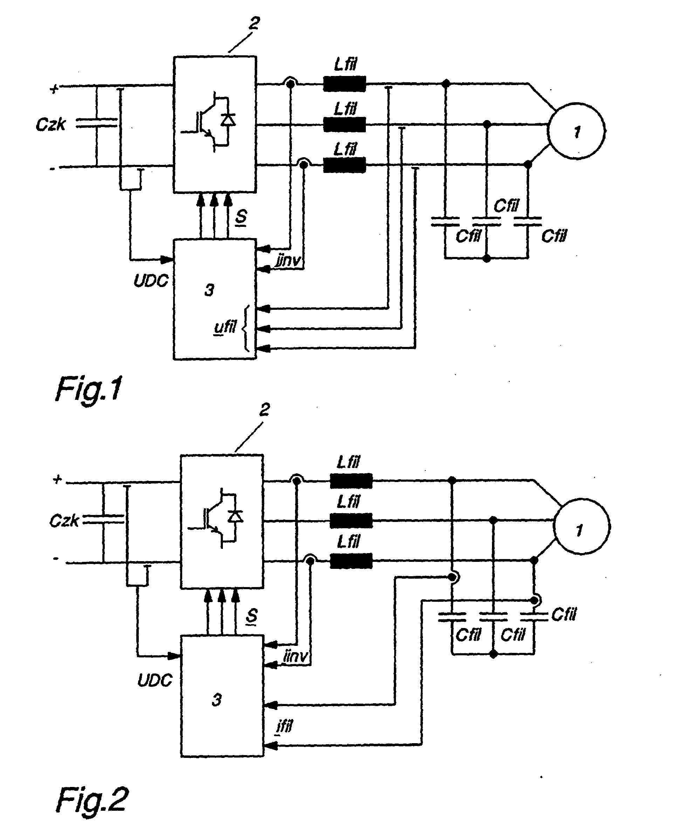

Figur 1 zeigt eine Schaltungsanordnung mit einer Drehfeldmaschine 1, die über ein Sinus-Filter, bestehend aus einem dreiphasigen Netzwerk mit Filterinduktivitäten $L_{fil}$ und Filterkapazitäten $C_{fil}$, von einem Umrichter 2 gespeist wird. Die Kapazitäten des Filter sind
zu einem mit dem Zwischenkreis nicht verbundenen
Sternpunkt zusammengefasst. Der Zwischenkreis ist
durch den Zwischenkreiskondensator $C_{zk}$ dargestellt.
Am Zwischenkreiskondensator liegt eine Gleichspannung $U_{DC}$. Zur Drehmomentregelung des Motors 1 ist
ein Drehmomentregler 3 vorgesehen. Dieser wird gemäss Figur 1 gespeist von der Zwischenkreisspannung
$U_{DC}$, von einem vom Umrichter abgegebenen Strom $i_{inv}$
und einer Filterausgangsspannung $\underline{u}_{fil}$. Nach der Variante gemäss Figur 2 kann anstelle der Filterausgangsspannung $\underline{u}_{fil}$ auch ein Filterstrom $\underline{i}_{fil}$ gemessen werden.
Beim Umrichter 2 kann es sich sowohl um einen Zweipunkt- wie auch um einen Dreipunktwechselrichter handeln.

Unterstrichene Grössen bezeichnen im folgenden jeweils Vektoren. Diese können aus den gemessenen Leiterströmen oder Leiterspannungen der
Phasen durch die bekannte 120°/90°-Transformation in
Vektoren transformiert werden.

Aus den gemessenen Grössen und einem
Fluss-Sollwert $\underline{\Psi}_{soll}$ und einem Drehmoment-Sollwert
$T_{soll}$ berechnet der Drehmomentregler 3 einen optimalen Steuerungsvektor $\underline{S}(S_A,S_B,S_C)$, der für die Ansteuerung der Schalter des Umrichters 2 verwendet wird.

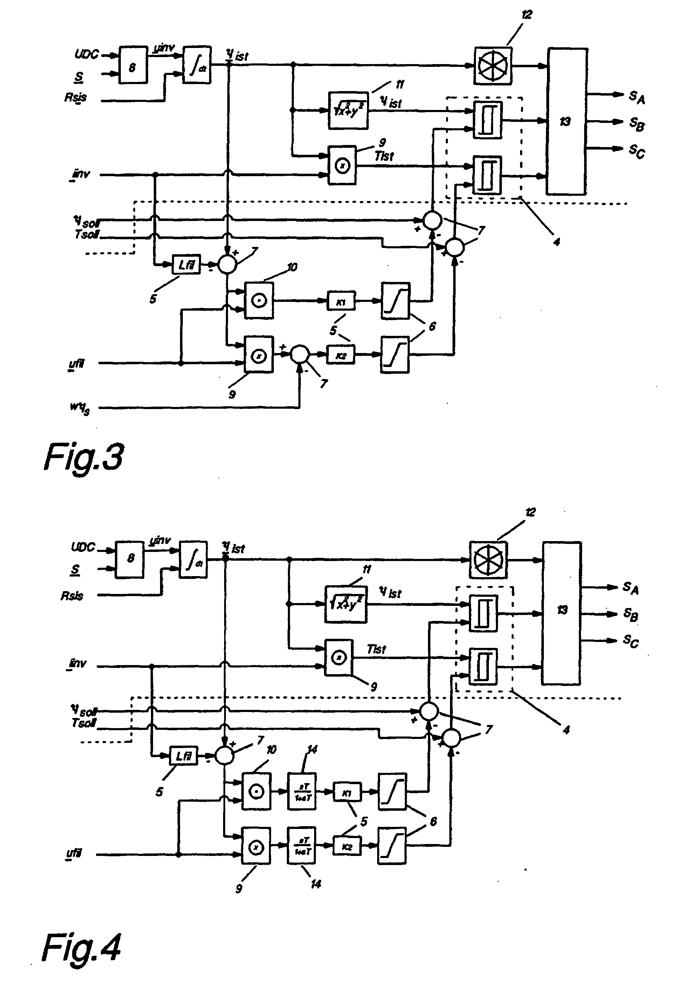

Die Figuren 3-7 zeigen Blockschemata verschiedener Varianten von Drehmomentreglern 3. Derjenige Teil des Reglers, der sich oberhalb der strichlierten Linie befindet, entspricht den bereits bekannten
DTC-Reglern. Der untere Teil umfasst die erfindungsgemässen Anpassungen.

Im folgenden wird noch einmal kurz auf das
Grundprinzip der DTC-Regelung eingegangen und die
der Erfindung zugrunde liegende Problematik erläutert:

Beim DTC-Verfahren wird aus einer Umrichterausgangsspannung $\underline{u}_{inv}$ und einer Korrekturgrösse
ein Fluss-Istwert $\underline{\Psi}_{ist}$ berechnet. Die Korrekturgrösse
entspricht in erster Näherung dem Spannungsabfall
$R_s \cdot i_s$ am Kupferwiderstand des Stators. Viel genauer
wird die Berechnung, wenn ein Motormodell zu Hilfe genommen wird. Dies ist jedoch für die Erfindung nicht von
Bedeutung, so dass an dieser Stelle mit dem erwähnten
Spannungsabfall weitergefahren wird.

Der Fluss-Istwert ergibt sich also durch: $\underline{\Psi}_{ist} =$
$\int(\underline{u}_{inv} - R_s\underline{i}_s)dt$. Die Umrichterausgangsspannung $\underline{u}_{inv}$
wird dabei mit Hilfe eines Spannungsbildners 8 aus der
Zwischenkreisspannung $U_{DC}$ und dem aktuellen Steuerungsvektor $\underline{S}$ gebildet. Aus dem berechneten Fluss-Istwert $\underline{\Psi}_{ist}$ und einem vom Umrichter abgegebenen Strom
$i_{inv}$ wird anschliessend ein Drehmoment-Istwert $T_{ist}$ gebildet. Den Strom $\underline{i}_{inv}$ erhält man durch Messen zweier
Phasenströme und Transformation in einen Vektor. Der
Drehmoment-Istwert $T_{ist}$ ergibt sich schliesslich durch
Bildung des Vektorprodukts des Stromes $i_{inv}$ und des
Flusses $\underline{\Psi}_{ist}$. Ausserdem wird noch der Betrag $\Psi_{ist}$ des
Fluss-Istwertes $\underline{\Psi}_{ist}$ gebildet. $T_{ist}$ und $\Psi_{ist}$ werden anschliessend mittels eines Hysteresereglers 4 mit entsprechenden von aussen vorgegebenen Sollwerten
$\Psi_{soll}$ bzw. $T_{soll}$ verglichen. Das Ergebnis dieses Vergleichs und das Ergebnis eines Vektorzuordners 12, der
anhand des Fluss-Istwertes $\underline{\Psi}_{ist}$ einen aktuellen Flussektor bestimmt, wird einer Logikschaltung 13 zugeführt, die einen optimalen Steuerungsvektor $\underline{S}(S_A,S_B,$
$S_C)$ für den Umrichter bestimmt.

Wird nun aber wie bei der Erfindung ein Sinus-
Filter zwischen Umrichter und Motor geschaltet, so ergibt sich bei der Schaltfrequenz einerseits aufgrund der
doppelten Integration des Filters eine 180° Phasenverschiebung von Strom und Spannung, so dass das
DTC-Verfahren nicht mehr unmittelbar angewendet
werden kann. Andererseits entstehen durch das Filter
resonante Oszillationen, die gedämpft werden sollen.
Deshalb muss das bekannte Verfahren bzw. die bekannte Vorrichtung, wie nachfolgend dargestellt wird,
angepasst werden.

Die Anpassung besteht im wesentlichen darin,
dass ein durch das Filter fliessender Strom bzw. eine
Filterausgangsspannung gemessen wird und der Fluss-
Sollwert, bzw. dessen Betragswert, und der Drehmoment-Sollwert nach Massgabe der gemessenen Filtergrössen korrigiert werden. Sie werden insbesondere
proportional zu einem oszillierenden Teil der Filterausgangsspannung vermindert. Zur Berechnung dieser oszillierenden Störgrösse bestehen verschiedene Varianten:

Ein erstes Ausführungsbeispiel (Figur 3) umfasst das Messen der Filterausgangsspannung an jeder Phase und eine Umwandlung z.B. mittels 120°/90°-Transformation in einen Vektor $\underline{u}_{fil}$. Ausserdem wird vom Fluss-Istwert $\underline{\Psi}_{ist}$ das Produkt $\underline{i}_{inv}L_{fil}$ abgezogen. Dazu sind ein Multiplikator 5 und ein Differenzbildner 7 vorgesehen. Auf diese Weise erhält man eine Grösse $\underline{\Psi}_s$, die einem Ständerfluss oder Statorfluss entspricht. Die Spannung $\underline{u}_{fil}$ wird nun in eine Komponente $u_{fild}$ parallel zu $\underline{\Psi}_s$ und eine Komponente $uf_{ilq}$ senkrecht zu $\underline{\Psi}_s$ aufgeteilt. Zu diesem Zwecke ist Vektorproduktbildner 9 und ein Skalarproduktbildner 10 vorgesehen, die die Spannung $\underline{u}_{fil}$ mit $\underline{\Psi}_s$ multiplizieren. Aus dem Vektorprodukt entsteht die Komponente $u_{filq}$, aus dem Skalarprodukt die Komponente $u_{fild}$. $u_{fild}$ stellt gerade den Oszillationen hervorrufenden Anteil der Filterausgangsspannung und wird deshalb in einem weiteren Multiplikator 5 mit der Konstante $K_1$ multipliziert, einem Begrenzer 6 zugeführt und in einem Differenzbildner 7 vom Fluss-Sollwert $\underline{\Psi}_{soll}$ abgezogen. Der oszillierende Teil von $u_{filq}$ muss hingegen noch gebildet werden. Nach Figur 3 geschieht dies dadurch, dass von $u_{filq}$ ein konstanter Wert $\overline{\omega}\cdot\underline{\psi}_s$ abgezählt wird. $\overline{\omega}$ entspricht dabei der Kreisfrequenz des Ständerflusses. Im stationären Zustand sollte $u_{filq}$ genau diesem Wert entsprechen, so dass also die Differenz $u_{filq}-\overline{\omega}\cdot\underline{\psi}_s$ gerade dem oszillierenden Teil $\Delta u_{filq}$ von $u_{filq}$ entspricht. Dieser Wert wird ebenfalls in einem Multiplikator 5 mit einer zweiten Konstante $K_2$ multipliziert und einem Begrenzer 6 zugeführt. Mit dem Ausgang dieses Begrenzers wird schliesslich der Drehmoment-Sollwert mittels eines weiteren Differenzbildners 7 vermindert.

Der Kern des erfindungsgemässen Verfahrens bzw. der Vorrichtung beruht also darauf, dass der Einfluss des Sinus-Filters in die Regelung miteinbezogen wird, indem erstens die Oszillationen verursachenden Anteile der Filterausgangsspannung gedämpft werden und statt der direkten Regelung von Motorfluss oder Motormoment entsprechende Grössen vor dem Filter, sozusagen ein virtueller Umrichterfluss bzw. ein Umrichtermoment, als Istgrössen geregelt werden.

Ein zweites Ausführungsbeispiel (Figur 4) unterscheidet sich vom ersten dadurch, dass die oszillierenden Teile der Komponenten $u_{fild}$ und $u_{filq}$ mittels einer Hochpass-Filterung gewonnen werden. Dazu sind zwei Hochpassfilter 14 vorgesehen, die nach der Vektor- bzw. Skalarproduktbildung 9, 10 vor die Multiplikatoren 5 geschaltet sind.

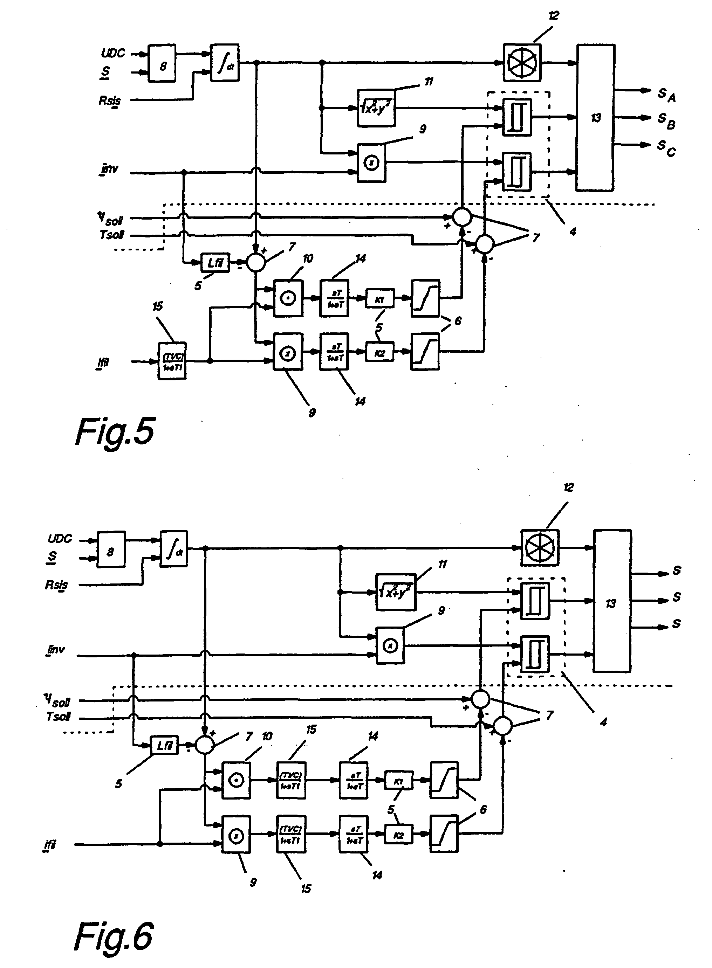

Bei einem dritten Ausführungsbeispiel (Figur 5) wird anstelle einer Filterausgangsspannung $\underline{u}_{fil}$ ein Filterstrom $\underline{i}_{fil}$ gemessen. Figur 5 basiert also auf Figur 2. $\underline{i}_{fil}$ erhält man beispielsweise durch Messen von zwei durch die Filterkondensatoren $C_{fil}$ fliessenden Strömen und Umwandlung dieser in einen Vektor. Zwei Ströme genügen, da die Summe aller Ströme wegen der Sternschaltung der Kondensatoren Null sein muss. Aus dem Strom $\underline{i}_{fil}$ kann mittels begrenzter Integration die Spannung $\underline{u}_{fil}$ am Kondensator berechnet werden. Aus diesem Grund ist in Figur 5 am Eingang von $\underline{i}_{fil}$ ein begrenzter Integrator 15 vorgesehen. Ansonsten entspricht die Anordnung nach Figur 5 derjenigen der Figur 4.

Selbstverständlich kann auch die Variante nach Figur 3 auf das dritte Ausführungsbeispiel angewandt werden. Nach einem vierten Ausführungsbeispiel (Figur 6) kann die Integration auch nach der Skalar- bzw. Vektorproduktebildung vorgenommen werden.

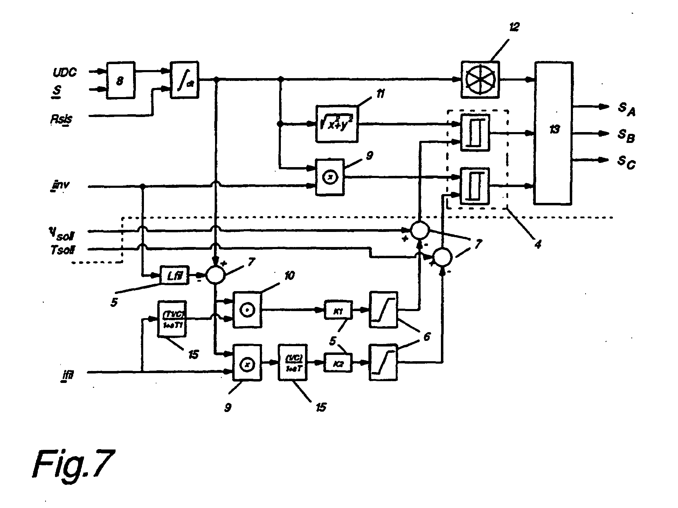

Figur 7 zeigt schliesslich ein auf Figur 2 basierendes Ausführungsbeispiel, bei dem die Integration bei der Komponentenbildung einerseits vor der Skalarproduktebildung 10 und andererseits nach der Vektorproduktebildung 9 vorgenommen wird. Da der Strom $\underline{i}_{fil}$ von vornherein parallel zu $\underline{\Psi}_s$ sein sollte, stellt der übrigbleibende Teil eines Vektorprodukts gerade den Oszillationen verursachenden Anteil dar. Umgekehrt verhält es sich mit dem Skalarprodukt, da hier die Spannung multipliziert mit $\underline{\Psi}_s$ Null ergeben sollte. Deshalb wird bei der Skalarproduktbildung zuerst die Spannung berechnet und bei der Vektorproduktbildung erst danach.

Die Erfindung weist den Vorteil auf, dass das bekannte DTC-Verfahren bzw. die bekannte DTC-Vorrichtung auch für eine Anordnung mit Sinus-Filter im wesentlichen weiterverwendet werden kann. Die Erfindung stellt einen für den Einsatz mit Sinus-Filter geeigneten Zusatz zur Verfügung, der den bekannten Teil praktisch unberührt lässt. Deshalb kann ein vorhandenes System auf einfache Weise ergänzt werden, ohne dass auf die Vorteile eines Sinus-Filters verzichtet werden muss.

**Bezugszeichenliste**

| | |
|---|---|
| 1 | Drehfeldmaschine |
| 2 | Umrichter |
| 3 | Drehmomentregler |
| 4 | Hystereseregler |
| 5 | Multiplikator |
| 6 | Begrenzer |
| 7 | Differenzbildner |
| 8 | Spannungsbildner |
| 9 | Vektorproduktebildner |
| 10 | Skalarproduktebildner |
| 11 | Betragsbildner |
| 12 | Vektorzuordner |
| 13 | Logikschaltung |
| 14 | Hochpassfilter |
| 15 | begrenzter Integrator |
| $\underline{u}_{fil}$ | Filterspannung |
| $u_{fild}$ | Komponente von $\underline{u}_{fil} \parallel$ zu $\underline{\Psi}_s$ |
| $u_{filq}$ | Komponente von $\underline{u}_{fil} \perp$ zu $\underline{\Psi}_s$ |
| $\Delta u_{filq}$ | oszillierender Teil von $u_{filq}$ |
| $\underline{i}_{fil}$ | Filterstrom |
| $L_{fil}$ | Filterinduktivität |

$C_{fil}$ — Filterkapazität
$C_{zk}$ — Zwischenkreiskondensator
$\underline{\Psi}_{ist}$ — Fluss-Istwert
$\Psi_{ist}$ — Betrag des Fluss-Istwert
$\Psi_{soll}$ — Fluss-Sollwert
$T_{ist}$ — Drehmoment-Istwert
$T_{soll}$ — Drehmoment-Sollwert
$\underline{u}_{inv}$ — Umrichterausgangsspannung
$\underline{i}_{inv}$ — Umrichterstrom
$U_{DC}$ — Zwischenkreisspannung
$R_s$ — Kupferwiderstand des Ständers
$\underline{i}_s$ — Ständerstrom
$\underline{\psi}_s$ — Ständerfluss
$\omega$ — Kreisfrequenz des Ständerflusses
$\underline{S}\,(S_A, S_B, S_C)$ — Steuerungsvektor für Umrichter
$K_1, K_2$ — Proportionalitätsfaktoren

**Patentansprüche**

1. Verfahren zur direkten Drehmomentregelung einer Drehfeldmaschine (1), die von einem mehrphasigen Umrichter (2) über ein dazwischen geschaltetes Sinus-Filter ($L_{fil}$, $C_{fil}$) gespeist wird, welches Verfahren die folgenden Schritte umfasst:

   (a) Berechnen eines Fluss-Istwertes $\underline{\psi}_{ist}$ aus einer Umrichterausgangsspannung $\underline{u}_{inv}$ und einer Korrekturgrösse, die im wesentlichen einem Spannungsabfall an einem Kupferwiderstand des Ständers der Drehfeldmaschine entspricht;
   (b) Berechnen eines Drehmoment-Istwertes $T_{ist}$ aus einem vom Umrichter abgegebenen Strom $\underline{i}_{inv}$ und dem Fluss-Istwert $\psi_{ist}$;
   (c) Vergleichen des Betrages des Fluss-Istwertes $\psi_{ist}$ und des Drehmoment-Istwertes $T_{ist}$ mittels eines Hysteresereglers (4) mit einem Drehmoment-Sollwert $T_{soll}$ bzw. einem Fluss-Sollwert $\psi_{soll}$;
   (d) Bilden eines optimalen Steuerungsvektors $\underline{S}(S_A, S_B, S_C)$ für den Umrichter nach Massgabe des Hysteresereglers (4) und des Betrages des Fluss-Istwertes $\psi_{ist}$;

   **dadurch gekennzeichnet, dass**

   (e) ein durch das Filter fliessender Strom $\underline{i}_{fil}$ und/oder eine Filterausgangsspannung $\underline{u}_{fil}$ gemessen werden und
   (f) der Fluss-Sollwertes $\psi_{soll}$ und der Drehmoment-Sollwert $T_{soll}$ bevor sie dem Hystereseregler (4) zugeführt nach Massgabe des durch das Filter fliessenden Stromes $\underline{i}_{fil}$ und/oder der Filterausgangsspannung $\underline{u}_{fil}$ korrigiert werden.

2. Verfahren nach Anspruch 1, **dadurch gekennzeichnet, dass** der Fluss-Sollwert $\psi_{soll}$ und der Drehmoment-Sollwert $T_{soll}$ dadurch korrigiert werden, dass:

   (a) ein Statorfluss $\underline{\psi}_s$ aus einer Differenz des Fluss-Istwertes $\underline{\psi}_{ist}$ und eines Produktes des vom Umrichter abgegebenen Stromes $\underline{i}_{inv}$ mit einer Induktivität $L_{fil}$ des Sinus-Filters gebildet wird;
   (b) die Filterausgangsspannung $\underline{u}_{fil}$ anhand des Statorfluss $\underline{\psi}_s$ in eine zum Statorfluss parallel Komponente $u_{fild}$ und ein zum Statorfluss senkrechte Komponente $u_{filq}$ umgewandelt wird;
   (c) der Fluss-Sollwert $\psi_{soll}$ um einen zur Komponente $u_{fild}$ proportionalen Anteil vermindert wird und der Drehmoment-Sollwert $T_{soll}$ proportional zu einen oszillierenden Anteil $\Delta u_{qfil}$ der Komponente $u_{filq}$ vermindert wird.

3. Verfahren nach Anspruch 2, **dadurch gekennzeichnet, dass** der oszillierende Anteil $\Delta u_{filq}$ der Komponente $u_{filq}$ aus einer Differenz der Komponente $u_{filq}$ und dem Produkt $\bar{\omega} \cdot \underline{\psi}_s$ des Statorflusses $\underline{\psi}_s$ und einer Kreisfrequenz $\bar{\omega}$ des Statorflusses $\underline{\psi}_s$ erzeugt wird.

4. Verfahren nach Anspruch 2, **dadurch gekennzeichnet, dass** der oszillierende Anteil $\Delta u_{filq}$ der Komponente $u_{filq}$ mittels einer Hochpassfilterung der Komponente $u_{filq}$ erzeugt wird.

5. Verfahren nach Anspruch 4, **dadurch gekennzeichnet, dass** auch die Komponente $u_{fild}$ einer Hochpassfilterung unterworfen wird.

6. Verfahren nach einem der Ansprüche 3 bis 5, **dadurch gekennzeichnet, dass**

   (a) der durch das Filter fliessende Strom $\underline{i}_{fil}$ gemessen wird und
   (b) die Filterausgangsspannung $\underline{u}_{fil}$ durch Integration des Stromes $\underline{i}_{fil}$ erzeugt wird.

7. Verfahren nach einem der Ansprüche 2 bis 6, **dadurch gekennzeichnet, dass** Umwandlung der Filterausgangsspannung $\underline{u}_{fil}$ in die zum Statorfluss parallele Komponente $u_{fild}$ und die zum Statorfluss $\underline{\psi}_s$ senkrechte Komponente $u_{filq}$ durch Bildung des Skalar- und des Vektorprodukts von $\underline{u}_{fil}$ und des Statorflusses $\underline{\psi}_s$ erfolgt.

8. Vorrichtung zur direkten Drehmomentregelung einer Drehfeldmaschine (1), die von einem mehrphasigen Umrichter (2) über ein dazwischen geschaltetes Sinus-Filter ($L_{fil}$, $C_{fil}$) gespeist wird, umfassend:

   (a) einen Drehmomentregler (3), der

- aus einer Umrichterausgangsspannung $\underline{u}_{inv}$ und einer Korrekturgrösse, die im wesentlichen einem Spannungsabfall an einem Kupferwiderstand des Ständers der Drehfeldmaschine entspricht, einen Fluss-Istwertes $\underline{\psi}_{ist}$ berechnet;
- aus einem vom Umrichter (2) abgegebenen Strom $\underline{i}_{inv}$ und dem Fluss-Istwert $\underline{\psi}_{ist}$ einen Drehmoment-Istwert $T_{ist}$ berechnet;
- den Betrag des Fluss-Istwertes $\psi_{ist}$ und den Drehmoment-Istwert $T_{ist}$ mittels eines Hysteresereglers (4) mit einem von aussen vorgegebenen Drehmoment-Sollwert $T_{soll}$ bzw. einem Fluss-Sollwert $\psi_{soll}$ vergleicht; und
- einen optimalen Steuerungsvektor $\underline{S}(S_A, S_B, Sc)$ für den Umrichter (2) nach Massgabe des Hysteresereglers (4) und des Fluss-Istwertes $\underline{\psi}_{ist}$ bildet;

**dadurch gekennzeichnet, dass**

(b) Strom- und Spannungsmessmittel vorgesehen sind, die einen durch das Filter fliessenden Strom $\underline{i}_{fil}$ und/oder eine Filterausgangsspannung $\underline{u}_{fil}$ messen, und
(c) Mittel vorgesehen sind, die den Fluss-Sollwert $\psi_{soll}$ und den Drehmoment-Sollwert $T_{soll}$ bevor sie dem Hystereseregler zugeführt werden nach Massgabe des durch das Filter fliessenden Stromes $\underline{i}_{fil}$ und/oder der Filterausgangsspannung $\underline{u}_{fil}$ korrigieren.

**9.** Vorrichtung nach Anspruch 8, **dadurch gekennzeichnet, dass** die zweiten Mittel umfassen:

(a) einen ersten Multiplikator (5) zur Bildung eines Produktes des vom Umrichter abgegebenen Stromes $\underline{i}_{inv}$ mit einer Induktivität $L_{fil}$ des Sinus-Filters;
(b) einen ersten Differenzbildner (7), der einen Statorfluss $\underline{\psi}_s$ aus einer Differenz des Fluss-Istwertes $\underline{\psi}_{ist}$ und des Produktes des vom Umrichter abgegebenen Stromes $\underline{i}_{inv}$ mit der Induktivität $L_{fil}$ des Sinus-Filters berechnet;
(c) einen Koordinatentransformator (9, 10), der die Filterausgangsspannung $\underline{u}_{fil}$ anhand des Statorfluss $\underline{\psi}_s$ in eine zum Statorfluss parallel Komponente $u_{fild}$ und ein zum Statorfluss senkrechte Komponente $u_{filq}$ umwandelt; und
(d) ein Sollwertregler, der den Fluss-Sollwert $\underline{\psi}_{soll}$ um einen zur Komponente $u_{fild}$ proportionalen Anteil vermindert und den Drehmoment-Sollwert $T_{soll}$ proportional zu einen oszillierenden Anteil $\Delta u_{qfil}$ der Komponente $u_{filq}$ vermindert.

**10.** Vorrichtung nach Anspruch 9, **dadurch gekenn-**

**zeichnet, dass** der Sollwertregler sowohl für die Komponente $u_{fild}$ als auch für die Komponente $u_{filq}$ je einen Multiplikator (5), der die Komponenten mit einer ersten Konstanten K1 bzw. einer zweiten Konstanten K2 multipliziert, je einen den Multiplikatoren nachgeschalteten Begrenzer (6) und je einen den Begrenzern (6) nachgeschalteten Differenzbildner (7) umfasst, wobei der der Komponente $u_{fild}$ zugeordnete Differenzbildner auf den Fluss-Sollwert $\psi_{soll}$ und der der Komponente $u_{filq}$ zugeordnete Differenzbildner auf den Drehmoment-Sollwert $T_{soll}$ wirkt.

## Claims

**1.** Method for direct torque control of a three-phase machine (1) which is fed from a multi-phase converter (2) via a harmonic filter ($L_{fil}$, $C_{fil}$) connected in between, which method comprises the following steps:

(a) Calculation of an actual flux value $\underline{\Psi}_{act}$ from a converter output voltage $\underline{u}_{inv}$ and a correction variable which corresponds essentially to a voltage drop across a copper resistance of the stator of the three-phase machine;
(b) Calculation of an actual torque value $T_{act}$ from a current $\underline{i}_{inv}$ emitted by the converter and from the actual flux value $\underline{\Psi}_{act}$;
(c) Comparison of the magnitude of the actual flux value $\underline{\Psi}_{act}$ and of the actual torque value $T_{act}$ by means of a hysteresis controller (4) using a reference torque value $T_{ref}$ or a reference flux value $\Psi_{ref}$;
(d) Formation of an optimum control vector $\underline{S}$ ($S_A$, $S_B$, $S_C$) for the converter governed by the hysteresis controller (4) and the magnitude of the actual flux value $\underline{\Psi}_{act}$;

wherein

(e) a current $\underline{i}_{fil}$ flowing through the filter and/or a filter output voltage $\underline{u}_{fil}$ are/is measured and
(f) the reference flux value $\underline{\Psi}_{ref}$ and the reference torque value $T_{ref}$ before they are supplied to the hysteresis controller (4) are corrected on the basis of the current $\underline{i}_{fil}$ flowing through the filter and/or on the basis of the filter output voltage $\underline{u}_{fil}$.

**2.** Method according to Claim 1, **characterized in that** the reference flux value $\underline{\Psi}_{ref}$ and the reference torque value $T_{ref}$ are corrected **in that**:

(a) a stator flux $\underline{\Psi}_s$ is formed from a difference between the actual flux value $\underline{\Psi}_{act}$ and a product of the current $\underline{i}_{inv}$ emitted by the converter with an inductance $L_{fil}$ of the harmonic filter;
(b) the stator flux $\underline{\Psi}_s$ is used to convert the filter output voltage $\underline{u}_{fil}$ into a component $u_{fild}$ parallel to the stator flux and into a component $u_{filq}$ at right angles to the stator flux;
(c) the reference flux value $\underline{\Psi}_{ref}$ is reduced by an amount proportional to the component $u_{fild}$, and the reference torque value $T_{ref}$ is reduced in proportion to an oscillating element $\Delta u_{qfil}$ of the component $u_{filq}$.

3. Method according to Claim 2, **characterized in that** the oscillating element $\Delta u_{filq}$ of the component $u_{filq}$ is produced from a difference between the component $u_{filq}$ and the product $\bar{\omega} \cdot \underline{\Psi}_s$ of the stator flux $\underline{\Psi}_s$ and an angular frequency $\bar{\omega}$ of the stator flux $\underline{\Psi}_s$.

4. Method according to Claim 2, **characterized in that** the oscillating element $\Delta u_{filq}$ of the component $u_{filq}$ is produced by high-pass filtering of component $u_{filq}$.

5. Method according to Claim 4, **characterized in that** the component $u_{fild}$ is also subjected to high-pass filtering.

6. Method according to one of Claims 3 to 5, **characterized in that**

    (a) the current $i_{fil}$ flowing through the filter is measured and
    (b) the filter output voltage $\underline{u}_{fil}$ is produced by integration of the current $i_{fil}$.

7. Method according to one of Claims 2 to 6, **characterized in that** the filter output voltage $\underline{u}_{fil}$ is converted into the component $u_{fild}$ parallel to the stator flux, and the component $u_{filq}$ at right angles to the stator flux $\underline{\Psi}_s$ is converted by formation of the scalar product and vector product of $\underline{u}_{fil}$ and the stator flux $\underline{\Psi}_s$.

8. Apparatus for direct torque control of a three-phase machine (1) which is fed from a multi-phase converter (2) via a harmonic filter ($L_{fil}$, $C_{fil}$) connected in between, comprising:

    (a) a torque controller (3), which

    - calculates an actual flux value $\underline{\Psi}_{act}$ from a converter output voltage $\underline{u}_{inv}$ and a correction variable which corresponds essentially to a voltage drop across a copper resistance of the stator of the three-phase machine;
    - calculates an actual torque value $T_{act}$ from a current $i_{inv}$ emitted by the converter (2) and by the actual flux value $\underline{\Psi}_{act}$;

    - compares the magnitude of the actual flux value $\underline{\Psi}_{act}$ and the actual torque value $T_{act}$ by means of a hysteresis controller (4) with an externally predetermined reference torque value $T_{ref}$ and, respectively, a reference flux value $\underline{\Psi}_{ref}$; and
    - forms an optimum control vector $\underline{S}(S_A, S_B, S_C)$ for the converter (2) governed by the hysteresis controller (4) and the actual flux value $\underline{\Psi}_{act}$;

    wherein
    (b) current and voltage instruments are provided which measure a current $i_{fil}$ flowing through the filter and/or a filter output voltage $\underline{u}_{fil}$, and
    (c) means are provided which correct the reference flux value $\underline{\Psi}_{ref}$ and the reference torque value $T_{ref}$ before they are supplied to the hysteresis controller on the basis of the current $i_{fil}$ flowing through the filter and/or the filter output voltage $\underline{u}_{fil}$.

9. Apparatus according to Claim 8, **characterized in that** the second means comprise:

    (a) a first multiplier (5) for forming a product of the current $i_{inv}$ emitted by the converter with an inductance $L_{fil}$ of the harmonic filter;
    (b) a first subtractor (7) which calculates a stator flux $\underline{\Psi}_s$ from a difference between the actual flux value $\underline{\Psi}_{act}$ and the product of the current $i_{inv}$ emitted by the converter with the inductance $L_{fil}$ of the harmonic filter;
    (c) a coordinate transformer (9, 10), which uses the stator flux $\underline{\Psi}_s$ to convert the filter output voltage $\underline{u}_{fil}$ into a component $u_{fild}$ parallel to the stator flux and a component $u_{filq}$ at right angles to the stator flux; and
    (d) a reference value controller which reduces the reference flux value $\underline{\Psi}_{ref}$ by an amount proportional to the component $u_{fild}$ and reduces the reference torque value $T_{ref}$ in proportion to an oscillating element $\Delta u_{qfil}$ of the component $u_{filq}$.

10. Apparatus according to Claim 9, **characterized in that**, both for the component $u_{fild}$ and for the component $u_{filq}$, the reference value controller comprises in each case one multiplier (5) which multiplies the components by a first constant K1 or, respectively, by a second constant K2, in each case one limiter (6) connected downstream of the multipliers, and in each case one subtractor (7) connected downstream of the limiters (6), the subtractor assigned to the component $u_{fild}$ acting on the reference flux value $\underline{\Psi}_{ref}$, and the subtractor assigned to the component $u_{filq}$ acting on the reference torque value $T_{ref}$.

## Revendications

1. Procédé de régulation directe de couple d'une machine à champ tournant (1) qui est alimentée par un convertisseur multiphasé (2) par l'intermédiaire d'un filtre sinus ($L_{fil}$, $C_{fil}$) intercalé, lequel procédé comprend les étapes suivantes :

   (a) calcul d'une valeur réelle de flux $\underline{\psi}_{réel}$ à partir d'une tension initiale de convertisseur $\underline{u}_{inv}$ et d'une grandeur corrective qui correspond substantiellement à une chute de tension sur une résistance en cuivre du stator de la machine à champ tournant ;
   (b) calcul d'une valeur réelle de couple $T_{réel}$ à partir d'un courant $\underline{i}_{inv}$ distribué par le convertisseur et de la valeur réelle de flux $\underline{\psi}_{réel}$ ;
   (c) comparaison du montant de la valeur réelle de flux $\underline{\psi}_{réel}$ et de la valeur réelle de couple $T_{réel}$ au moyen d'un régulateur d'hystérésis (4) avec une valeur théorique de couple $T_{théo}$ ou une valeur théorique de flux $\underline{\psi}_{théo}$ ;
   (d) constitution d'un vecteur de commande optimal $\underline{S}(S_A, S_B, S_C)$ pour le convertisseur au prorata du régulateur d'hystérésis (4) et du montant de la valeur réelle de flux $\underline{\psi}_{réel}$ ;

   **caractérisé en ce que**

   (e) un courant $\underline{i}_{fil}$ s'écoulant à travers le filtre et/ou une tension initiale de filtrage $\underline{u}_{fil}$ sont mesurés et
   (f) que la valeur théorique de flux $\psi_{théo}$ et la valeur théorique de couple $T_{théo}$, avant d'être communiquées au régulateur d'hystérésis (4), sont corrigées au prorata du courant $\underline{i}_{fil}$ s'écoulant à travers le filtre et/ou de la tension initiale de filtrage $\underline{u}_{fil}$.

2. Procédé selon la revendication 1, **caractérisé en ce que** la valeur théorique de flux $\psi_{théo}$ et la valeur théorique de couple $T_{théo}$ sont corrigées en :

   (a) constituant un flux de stator $\underline{\psi}_s$ à partir d'une différence de la valeur réelle de flux $\underline{\psi}_{réel}$ et d'un produit du courant $\underline{i}_{inv}$ distribué par le convertisseur avec une inductance $L_{fil}$ du filtre sinus ;
   (b) transformant la tension initiale de filtrage $\underline{u}_{fil}$ sur la base du flux de stator $\underline{\psi}_s$ en un composant $u_{fild}$ parallèle au flux de stator et un composant $u_{filq}$ perpendiculaire au flux de stator ;
   (c) réduisant la valeur théorique de flux $\underline{\psi}_{théo}$ d'une partie proportionnelle au composant $u_{fild}$ et en réduisant la valeur théorique de couple $T_{théo}$ proportionnellement à une partie oscillante $\Delta u_{qfil}$ des composants $u_{filq}$.

3. Procédé selon la revendication 2, **caractérisé en ce que** la partie oscillante $\Delta u_{filq}$ des composants $u_{filq}$ est générée à partir d'une différence des composants $u_{filq}$ et du produit $\omega \cdot \underline{\psi}_s$ du flux de stator $\underline{\psi}_s$ et d'une fréquence de circuit $\omega$ du flux de stator $\underline{\psi}_s$.

4. Procédé selon la revendication 2, **caractérisé en ce que** la partie oscillante $\Delta u_{filq}$ des composants $u_{filq}$ est générée au moyen d'un filtrage passe-haut des composants $u_{filq}$.

5. Procédé selon la revendication 4, **caractérisé en ce que** les composants $u_{fild}$ sont également soumis à un filtrage passe-haut.

6. Procédé selon l'une quelconque des revendications 3 à 5, **caractérisé en ce que**

   (a) le courant $\underline{i}_{fil}$ s'écoulant à travers le filtre est mesuré et
   (b) la tension initiale de filtrage $\underline{u}_{fil}$ est générée par intégration du courant $\underline{i}_{fil}$.

7. Procédé selon l'une quelconque des revendications 2 à 6, **caractérisé en ce qu'**il se produit une conversion de la tension initiale de filtrage $\underline{u}_{fil}$ en composant $u_{fild}$ parallèle au flux de stator et en composant $u_{filq}$ perpendiculaire au flux de stator $\underline{\psi}_s$ par constitution de produit scalaire et vecteur de $\underline{u}_{fil}$ et du flux de stator $\underline{\psi}_s$.

8. Dispositif de régulation directe de couple d'une machine à champ tournant (1) qui est alimentée par un convertisseur multiphasé (2) par l'intermédiaire d'un filtre sinus ($L_{fil}$, $C_{fil}$) intercalé, comprenant :

   (a) un régulateur de couple (3) qui

   - calcule une valeur réelle de flux $\underline{\psi}_{réel}$ à partir d'une tension initiale de convertisseur $\underline{u}_{inv}$ et d'une grandeur corrective qui correspond substantiellement à une chute de tension sur une résistance en cuivre du stator de la machine à champ tournant ;
   - calcule une valeur réelle de couple $T_{réel}$ à partir d'un courant $\underline{i}_{inv}$ distribué par le convertisseur et de la valeur réelle de flux $\underline{\psi}_{réel}$ ;
   - compare le montant de la valeur réelle de flux $\psi_{réel}$ et la valeur réelle de couple $T_{réel}$ au moyen d'un régulateur d'hystérésis (4) avec une valeur théorique de couple $T_{théo}$ prédéfinie de l'extérieur ou une valeur théorique de flux $\psi_{théo}$ ; et
   - constitue un vecteur de commande optimal $\underline{S}(S_A, S_B, S_C)$ pour le convertisseur (2) au prorata du régulateur d'hystérésis (4) et de la valeur réelle de flux $\underline{\psi}_{réel}$ ;

**caractérisé en ce que**

(b) il est prévu des moyens de mesure de courant et de tension qui mesurent un courant $i_{fil}$ s'écoulant à travers le filtre et/ou une tension initiale de filtrage $u_{fil}$, et

(c) il est prévu des moyens qui corrigent la valeur théorique de flux $\psi_{théo}$ et la valeur théorique de couple $T_{théo}$ avant que celles-ci ne soient communiquées au régulateur d'hystérésis au prorata du courant $i_{fil}$ s'écoulant à travers le filtre et/ou de la tension initiale de filtrage $u_{fil}$.

9.   Dispositif selon la revendication 8, **caractérisé en ce que** les deuxièmes moyens comprennent :

(a) un premier multiplicateur (5) pour la constitution d'un produit du courant $i_{inv}$ distribué par le convertisseur avec une inductance $L_{fil}$ du filtre sinus ;

(b) un premier constituteur de différence (7) qui calcule un flux de stator $\psi_s$ à partir d'une différence de la valeur réelle de flux $\psi_{réel}$ et du produit du courant $i_{inv}$ distribué par le convertisseur avec l'inductance $L_{fil}$ du filtre sinus ;

(c) un transformateur à coordonnées (9, 10) qui transforme la tension initiale de filtrage $u_{fil}$ sur la base du flux de stator $\psi_s$ en un composant $u_{fild}$ parallèle au flux de stator et un composant $u_{filq}$ perpendiculaire au flux de stator ; et

(d) un régulateur de valeur théorique qui réduit la valeur théorique de flux $\psi_{théo}$ d'une partie proportionnelle au composant $U_{fild}$ et réduit la valeur théorique de couple $T_{théo}$ proportionnellement à une partie oscillante $\Delta u_{qfil}$ du composant $u_{filq}$.

10.   Dispositif selon la revendication 9, **caractérisé en ce que** le régulateur de valeur théorique comporte, aussi bien pour les composants $u_{fild}$ que pour les composants $u_{filq}$, à chaque fois un multiplicateur (5) qui multiplie les composants à une première constante K1 ou une deuxième constante K2, un limiteur (6) installé en aval de chaque multiplicateur et un constituteur de différence (7) installé en aval de chaque limiteur (6), le constituteur de différence associé au composant $u_{fild}$ agissant sur la valeur théorique de flux $\psi_{théo}$ et le constituteur de différence associé au composant $u_{filq}$ agissant sur la valeur théorique de couple $T_{théo}$.

*Fig.1*

*Fig.2*

10

**Fig.3**

**Fig.4**

**Fig.5**

**Fig.6**

Fig.7